# EUROPEAN PATENT SPECIFICATION

(11) **EP 3 499 928 B1**
(45) Date of publication and mention of the grant of the patent: **27.01.2021**
(21) Application number: 17207198.7
(22) Date of filing: 14.12.2017
(51) Int. Cl.: H04W 4/70, H04B 17/318, H04L 1/20, H04L 1/00, H04L 12/24, H04B 17/23, H04W 24/10

(54) **DETERMINING SIGNAL QUALITY IN A LOW-POWER WIDE-AREA NETWORK**
BESTIMMUNG DER SIGNALQUALITÄT IN EINEM WEITBEREICHSNETZWERK MIT NIEDRIGER LEISTUNG
DÉTERMINATION DE LA QUALITÉ DE SIGNAUX DANS UN RÉSEAU LONGUE PORTÉE À FAIBLE PUISSANCE

(43) Date of publication of application: 19.06.2019
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(56) References cited:
- CN-A- 104 955 082
- JP-A- 2016 058 049
- US-A1- 2010 027 434

## Description

The present invention relates to a method of determining the strength of a signal between a node and a gateway in a low-power wide-area network (LPWAN) according to claim 1, a mobile electronic device for use with an LPWAN according to claim 7, a node for use in an LPWAN according to claim 10, an LPWAN according to claim 12, and a computer program product or a program code or system according to claims 14 and 15.

### Background of the Invention

A low-power wide-area network (LPWAN) for the Internet of Things comprises a plurality of nodes and a gateway for connecting the LPWAN to a server or to the internet, for example. Each of the nodes comprises, for example, a sensor and an antenna, but is generally not connected to a mains source of electrical power and instead has its own low-power electrical power source, such as a battery, supercapacitor or energy-harvesting device. This electrical power source is for supplying electrical power to the sensor and to the antenna. However, due to the constraints placed on each node by the limited power capacity of such an electrical power source, each of the nodes does not have any user interface of its own, such a display or any indicator light(s).

When such a node is added to an LPWAN, it is necessary to check the signal strength between the node and the gateway, either directly to the gateway or via one or more other nodes already in the network. In the prior art, this has generally been done by connecting a test device to the newly added node via a cable. However, nodes may often be located in inaccessible areas, such as in remote and/or rural locations, making this difficult to do. In such a case, or even if a node is located in an LPWAN signal-blocking environment, such as in a heavily built-up area, there is a high probability that the signal quality between the node and the gateway is poor or non-existent.

Consequently, there is a need for a solution to check the signal quality of LPWAN nodes, either at the time of their initial installation in an LPWAN and/or when carrying out maintenance inspections.

Background prior art to the present invention can be found in, for example, any of the following patent documents: US 9,538,578, WO 2012/139288, WO 2014/114344, US 9,544,870, US 7,663,481 and WO 2014/087138.

US2010/027434 discloses a method to determine the location of a new sensor in a sensor network when installing the new sensor. A Portable Received Signal Strength Indication (RSSI) Measurement Device (PRMD) determines the RSSI and the quality of transmission towards all neighbouring sensors; by transmitting RSSI requests. This information is displayed and then the user (wireless sensor network manager) can determine to install the UE at the selected location (or not).

CN104955082 discloses a system for monitoring the link quality of sensors in a wireless sensor network by gathering the quality of the link for each sensors during each data transmission and displaying historical RSSI data.

JP2016058049 discloses a system in which a mobile unit (a vehicle) analyses link quality between the mobile unit and sensors in the vicinities and download data from the sensors.

### Object of the Invention

It is therefore an object of the invention to provide a method of determining the strength of a signal between a node and a gateway in a low-power wide-area network (LPWAN), a mobile electronic device for use with an LPWAN, a node for use in an LPWAN, an LPWAN, and a computer program product or a program code or system for operating a mobile electronic device for use with an LPWAN and for operating a node for use in an LPWAN.

### Description of the Invention

The object of the invention is solved by a method of determining the strength of a signal between a node and a gateway in a low-power wide-area network (LPWAN) according to claim 1. The method according to the invention at least comprises detecting proximity of the respective node to a mobile electronic device by detecting an LPWAN signal of the respective node above a predetermined threshold value with the mobile electronic device, transmitting a control signal from the mobile electronic device to the respective node requesting quality-of-signal data from the respective node, the quality-of-signal data representing the strength of the signal between the respective node and the gateway, transmitting the quality-of-signal data from the respective node to the mobile electronic device, and displaying the quality-of-signal data via a user interface of the mobile electronic device.

This solution is beneficial because it allows a user of the mobile electronic device to check the signal quality of a node without having to come into physical contact with the node, for example by connecting a test device to the node via a cable. Thus the signal quality of the node can be checked even if it is in a remote or inaccessible location.

Advantageous embodiments of the invention may be configured according to any claim and/or part of the following description.

The method may further comprise storing the quality-of-signal data in the respective node before transmitting the quality-of-signal data from the respective node to the mobile electronic device. This solution is beneficial because it allows historical quality-of-signal data as well as actual (current) quality-of-signal data to be checked.

The method may also further comprise adjusting the strength of the signal between the respective node and the gateway in response to the quality-of-signal data displayed via the user interface, without moving or contacting the respective node. This solution is beneficial because it also does not require a user of the mobile electronic device to come into physical contact with the node. Thus the strength of the signal between the respective node and the gateway can be adjusted even if it is in a remote or inaccessible location.

For example, adjusting the strength of the signal between the respective node and the gateway may at least comprise introducing an additional routing node into the LPWAN wirelessly connecting the respective node to the gateway.

The method may further comprise, before detecting proximity of the respective node to the mobile electronic device, installing the respective node in a location remote from the gateway. In other words, the process for determining the strength of the signal between the node and the gateway may conveniently form part of an installation process for the node.

The method may further comprise, before detecting proximity of the respective node to the mobile electronic device, configuring the mobile electronic device by setting the threshold value. This solution is beneficial because the threshold value for detecting the signal between the node and the gateway may thus be adapted to the particular disposition of an LPWAN of which the node forms part.

The present invention also relates to a mobile electronic device for use with a low-power wide-area network according to claim 7. The mobile electronic device at least comprises a proximity sensor configured to detect the proximity of a node in the LPWAN to the mobile electronic device by detecting an LPWAN signal of the respective node above a predetermined threshold value, means for transmitting a control signal from the mobile electronic device to the respective node requesting quality-of-signal data from the respective node, wherein the quality-of-signal data represents the strength of a signal between the respective node and a gateway of the LPWAN, means for receiving the quality-of-signal data from the respective node, and a user interface for displaying the quality-of-signal data to a user of the mobile device .

This solution is beneficial since it provides a convenient mobile electronic device by which the strength of a signal between the respective node and the gateway can be checked without having to come into physical contact with the node, for example by connecting a test device to the node via a cable. Thus the signal quality of the node can be checked even if it is in a remote or inaccessible location.

In one possible embodiment of the invention, the mobile electronic device may be an application-specific device, and the proximity sensor of the mobile electronic device may comprise a dedicated LPWAN antenna.

In an alternative possible embodiment, however, the mobile electronic device may be a smart phone comprising an antenna designed for use in mobile telephony, wherein the proximity sensor comprises the antenna of the smart phone, the user interface comprises a display screen of the smart phone, and the smart phone comprises a computer program product or a program code or system configured to adapt the antenna of the smart phone to function as an LPWAN antenna and to give the smart phone the means for transmitting the control signal and the means for receiving the quality-of-signal data via the antenna. This solution is beneficial because the smart phone can therefore be used to check the strength of the signal between the respective node and the gateway without modification of its physical hardware.

The present invention further relates to a node according to claim 10 for use in a low-power wide-area network, the node transmitting a LPWAN signal, wherein the node at least comprises at least one sensor, a low-power antenna, an electrical power source for providing electrical power to the sensor and to the antenna, and means for transmitting quality-of-signal data representing the strength of a signal between the node and a gateway of the LPWAN from the node to a mobile electronic device when requested to do so by a control signal received from the mobile electronic device. In other words, the node is at least distinguished from prior art nodes by being responsive to a control signal received from a mobile electronic device to transmit the quality-of-signal data to the mobile electronic device.

Preferably, the node further comprises a memory for storing the quality-of-signal data in the node before transmitting the quality-of-signal data from the node to the mobile electronic device. This solution is beneficial because it allows historical quality-of-signal data as well as actual (current) quality-of-signal data to be received by the mobile electronic device.

In some embodiments, the at least one sensor may comprise a sensor of at least one of environmental data comprising temperature, humidity and/or pressure readings, and metering data comprising utility supply and/or consumption readings.

The present invention also relates to a low-power wide-area network (LPWAN) comprising at least one node as described herein.

The present invention further relates to a computer program product or a program code comprising instructions which, when the program is executed by a mobile electronic device, cause the mobile electronic device to operate as described herein.

The present invention further relates to a computer program product or a program code comprising instructions which, when the program is executed by a node, cause the node to operate as described herein.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic diagram of a low-power wide-area network (LPWAN) of the prior art; and
Fig. 2 is a schematic diagram of an embodiment of a mobile device in use in a low-power wide-area network (LPWAN).

### Detailed Description of the Drawings

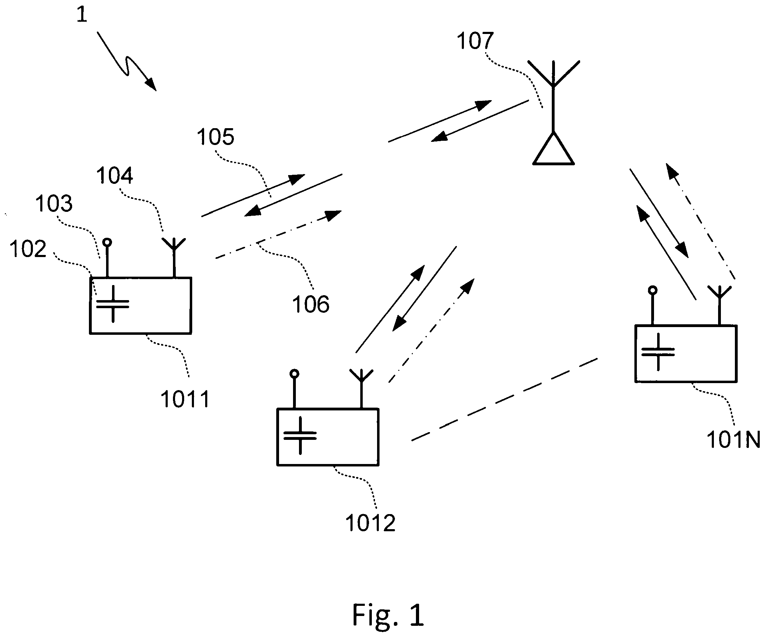

Fig. 1 schematically shows a low-power wide-area network (LPWAN) 1. The LPWAN 1 comprises a plurality of low-power nodes 1011, 1012, ... 101N and a gateway 107. The nodes 101*x* are wirelessly connected to each other and to the gateway 107 in a mesh configuration or in a star configuration, for example. The gateway 107 may in turn be connected to a server or to the internet, for example. Each of the low-power nodes 101*x* comprises an electrical power source 102, such as a battery, supercapacitor or energy-harvesting device, at least one sensor 103, and a low-power antenna 104. The electrical power source 102 is for providing electrical power to the sensor 103 and to the antenna 104. The electrical power source 102 has only a very low power rating, which can be measured in milliwatts, for example. Consequently, each of the nodes 101*x* lacks any user interface for displaying any information, such as a display screen and/or any indicator lights, which would otherwise consume too much power for the electrical power source 102 to be able to supply.

During operation of each node 101*x*, the at least one sensor 103 collects data locally, such as environmental data comprising temperature, humidity and/or pressure readings or metering data comprising utility supply and/or consumption readings, and the antenna transmits this data to the gateway 107, either directly or via one or more of the other nodes 101*x* in the LPWAN 1.

During normal operation of the LPWAN 1, therefore, the low-power nodes 101*x* are in communication with the gateway 107 to transmit and receive data traffic 105, such as data collected by the sensors 103 or polling data sent to a particular one or ones of the nodes 101*x* from the gateway 107. The data traffic 105 has a low bit rate and is transmitted at low power, in order to conserve the electrical energy of the electrical power source 102 of each respective node 101*x*. During normal operation, the data traffic 105 between each respective node 101*x* and the gateway 107 also comprises quality-of-signal data 106, which represents the quality (*i.e*. strength) of the signal between each of the nodes 101*x* and the gateway 107. However, a problem exists with the set-up of Fig. 1, in that if any one of the low-power nodes 101*x* is out of range of the rest of the LPWAN 1, the data traffic 105, and therefore the quality-of-signal data 106, cannot be communicated from that node to the gateway 107.

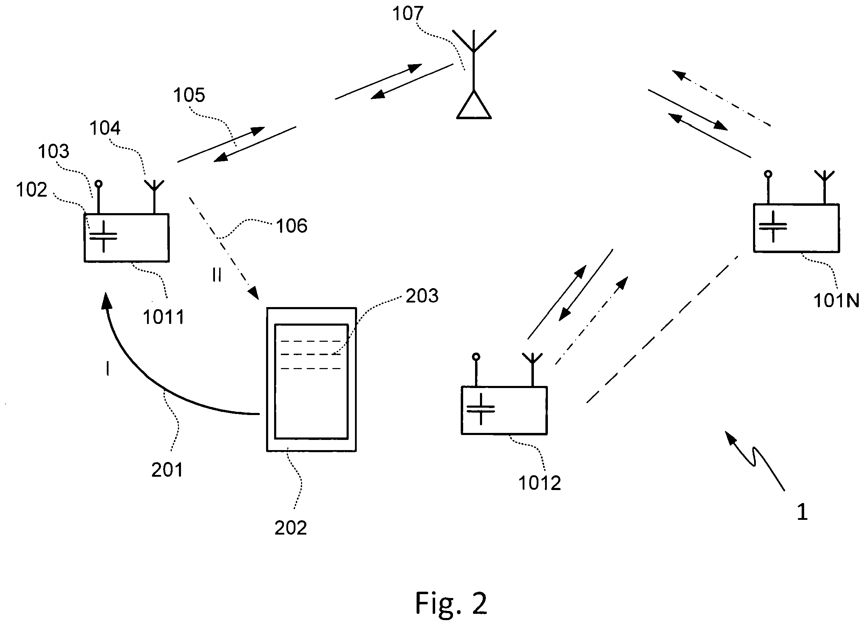

Fig. 2 schematically shows a similar low-power wide-area network (LPWAN) 1 to that of Fig. 1, in which a mobile device 202 is in communication with at least one of the low-power nodes 101*x*. The mobile device 202 comprises a proximity sensor, which is able to detect the proximity of any one of the low-power nodes 101*x* by detecting the LPWAN signal of the respective node 101*x*. The mobile device 202 also comprises a user interface, such as a display screen 203 and/or one or more indicator lights. The mobile device 202 may be an application-specific mobile device or it may instead be, for example, a smart phone comprising software configured to give the mobile device 202 the same functionality. Thus the proximity sensor of the mobile device 202 may comprise a dedicated LPWAN antenna, or it may instead comprise an antenna of such a smart phone which is usually used for mobile telephony, but which is adapted to function as an LPWAN antenna in the present context by suitable software loaded on the smart phone. In any case, the mobile device 202 is configured to recognize that one of the low-power nodes 101*x* is nearby whenever the proximity sensor of the mobile device 202 detects an LPWAN signal above a predetermined threshold value.

During operation, when the proximity sensor of the mobile device 202 does detect such an LPWAN signal which is above the predetermined threshold value, the mobile device 202 sends a control signal 201 to the nearby one of the low-power nodes 101*x* (which in the illustrated example is node 1011) requesting quality-of-signal data 106 from the respective node 1011, as is represented in Fig. 2 by reference numeral I. In response to this control signal 201, the nearby one of the low-power nodes 1011 transmits the quality-of-signal data 106, representing the quality (*i.e.* strength) of the signal between the respective node 1011 and the gateway 107, back to the mobile device 202, as is represented in Fig. 2 by reference numeral II. The respective one of the low-power nodes 101*x* may have a memory for storing the quality-of-signal data 106 measured previously and/or it may provide an actual (*i.e.* current) value of the quality-of-signal data 106 to the mobile device 202. This quality-of-signal data 106 is then displayed to the user via the user interface 203 of the mobile device 202.

Thus, either during initial set-up of the LPWAN 1 or during a maintenance inspection of the LPWAN 1, a user of the mobile device 202 can determine the strength of the signal between the gateway 107 and the respective one of the low-power nodes 101*x* which is near to the mobile device 202. The user can therefore take any remedial action which might be necessary to improve the quality of the LPWAN signal between the respective one of the low-power nodes 101*x* and the gateway 107. This may be, for example, by introducing an additional routing node into the LPWAN 1 between the gateway 107 and the respective one of the low-power nodes 101*x*, which is near to the mobile device 202 to wirelessly connect the respective node 101*x* to the gateway 107. Thus both the quality-of-signal data 106 can be measured and any such remedial action can be taken without any need to move, connect a cable to or otherwise come into contact with the respective one of the low-power nodes 101*x* which is detected to be near to the mobile device 202.

In summary, therefore, the present invention provides a method of determining the strength of a signal between a node and a gateway in a low-power wide-area network. The method at least comprises detecting proximity of the respective node to a mobile electronic device by detecting an LPWAN signal of the respective node above a predetermined threshold value with the mobile electronic device, transmitting a control signal from the mobile electronic device to the respective node requesting quality-of-signal data from the respective node, the quality-of-signal data representing the strength of the signal between the respective node and the gateway, transmitting the quality-of-signal data from the respective node to the mobile electronic device, and displaying the quality-of-signal data via a user interface of the mobile electronic device. This allows a user of the mobile electronic device to check the signal quality of the node without having to come into physical contact with the node, for example by connecting a test device to the node via a cable. Thus the signal quality of the node can be checked even if it is in a remote or inaccessible location. The invention also provides a mobile electronic device for use with an LPWAN to check the signal quality of the node, a node for use in an LPWAN which can be checked in this manner, an LPWAN comprising such a node, and a computer program product or a program code or system for operating such a mobile electronic device or for operating such a node.

**Reference Numerals:**

| | | | |
|---|---|---|---|
| 1 | Low-power wide-area network | 1011 | Node 1 |
| 101x | Low-power node | 1012 | Node 2 |
| 102 | Electrical power source | 101N | Node N |
| 103 | Sensor | 201 | Control signal |
| 104 | Low-power antenna | 202 | Mobile device |
| 105 | Data traffic | 203 | User interface |
| 106 | Quality-of-signal data | | |
| 107 | Network gateway | | |

## Claims

1. A method of determining the strength of a signal between a node (1011, 1012, 101N) and a gateway (107) in a low-power wide-area network (LPWAN) (1), the method at least comprising:
detecting proximity of the respective node (1011) to a mobile electronic device (202) by detecting an LPWAN signal of the respective node above a predetermined threshold value with the mobile electronic device (202);
transmitting (I) a control signal (201) from the mobile electronic device (202) to the respective node (1011) requesting quality-of-signal data (106) from the respective node (1011), the quality-of-signal data (106) representing the strength of the signal between the respective node (1011) and the gateway (107);
transmitting (II) the quality-of-signal data (106) from the respective node (1011) to the mobile electronic device (202); and
displaying the quality-of-signal data (106) via a user interface (203) of the mobile electronic device (202).

2. A method according to claim 1, further comprising:
storing the quality-of-signal data (106) in the respective node (1011) before transmitting (II) the quality-of-signal data (106) from the respective node (1011) to the mobile electronic device (202).

3. A method according to claim 1 or claim 2, further comprising:
adjusting the strength of the signal between the respective node (1011) and the gateway (107) in response to the quality-of-signal data (106) displayed via the user interface (203), without moving or contacting the respective node (1011).

4. A method according to claim 3, wherein adjusting the strength of the signal between the respective node (1011) and the gateway (107) at least comprises introducing an additional routing node into the LPWAN (1) wirelessly connecting the respective node (1011) to the gateway (107).

5. A method according to any one of the preceding claims, further comprising:
before detecting proximity of the respective node (1011) to the mobile electronic device (202), installing the respective node (1011) in a location remote from the gateway (107).

6. A method according to any one of the preceding claims, further comprising:
before detecting proximity of the respective node (1011) to the mobile electronic device (202), configuring the mobile electronic device (202) by setting the threshold value.

7. A mobile electronic device (202) for use with a low-power wide-area network (LPWAN) (1), the mobile electronic device (202) at least comprising:
a proximity sensor configured to detect the proximity of a node (1011, 1012, 101N) in the LPWAN (1) to the mobile electronic device (202) by detecting an LPWAN signal of the respective node (1011) above a predetermined threshold value;
means for transmitting (I) a control signal (201) from the mobile electronic device (202) to the respective node (1011) requesting quality-of-signal data (106) from the respective node (1011), the quality-of-signal data (106) representing the strength of a signal between the respective node (1011) and a gateway (107) of the LPWAN (1);
means for receiving (II) the quality-of-signal data (106) from the respective node (1011); and
a user interface (203) for displaying the quality-of-signal data (106) to a user of the mobile device (202).

8. A mobile electronic device according to claim 7, wherein:
the mobile electronic device (202) is an application-specific device; and
the proximity sensor of the mobile electronic device (202) comprises a dedicated LPWAN antenna.

9. A mobile electronic device according to claim 7, wherein:
the mobile electronic device (202) is a smart phone comprising an antenna designed for use in mobile telephony;
the proximity sensor comprises the antenna of the smart phone;
the user interface (203) comprises a display screen of the smart phone; and
the smart phone comprises a computer program product or a program code or system configured to adapt the antenna of the smart phone to function as an LPWAN antenna and to give the smart phone the means for transmitting (I) the control signal (201) and the means for receiving (II) the quality-of-signal data (106) via the antenna.

10. A node (1011, 1012, 101N) for use in a low-power wide-area network (LPWAN) (1), the node transmitting a LPWAN signal, the node at least comprising:
at least one sensor (103);
a low-power antenna (104);
an electrical power source (102) for providing electrical power to the sensor (103) and to the antenna (104); and
means for transmitting (II) quality-of-signal data (106) representing the strength of a signal between the node and a gateway (107) of the LPWAN (1), from the node to a mobile electronic device (202) when requested to do so by a control signal (201) received from the mobile electronic device (202).

11. A node according to claim 10, further comprising a memory for storing the quality-of-signal data (106) in the node (1011) before transmitting (II) the quality-of-signal data (106) from the node to the mobile electronic device (202).

12. A node according to claim 10 or claim 11, wherein the at least one sensor comprises a sensor of at least one of:
environmental data comprising temperature, humidity and/or pressure readings; and
metering data comprising utility supply and/or consumption readings.

13. A low-power wide-area network (LPWAN) (1) comprising at least one node (1011, 1012, 101N) according to any one of claims 10 to 12.

14. A computer program product or a program code comprising instructions which, when the program is executed by a mobile electronic device, cause the mobile electronic device to operate according to any one of claims 7 to 9.

15. A computer program product or a program code comprising instructions which, when the program is executed by a node, cause the node to operate according to any one of claims 10 to 12.

## Patentansprüche

1. Verfahren zum Bestimmen der Stärke eines Signals zwischen einem Knoten (1011, 1012, 101N) und einem Gateway (107) in einem Weitverkehrsnetz mit geringer Leistung (LPWAN) (1), wobei das Verfahren zumindest aufweist:
Erfassen der Nähe des jeweiligen Knotens (1011) zu einer mobilen elektronischen Vorrichtung (202) durch Erfassen eines LPWAN-Signals des jeweiligen Knotens oberhalb eines vorbestimmten Schwellenwertes mit der mobilen elektronischen Vorrichtung (202);
Übertragen (I) eines Steuersignals (201) von der mobilen elektronischen Vorrichtung (202) zu dem jeweiligen Knoten (1011), das Signalqualitätsdaten (106) von dem jeweiligen Knoten (1011) anfordert, wobei die Signalqualitätsdaten (106) die Stärke des Signals zwischen dem jeweiligen Knoten (1011) und dem Gateway (107) repräsentieren;
Übertragen (II) der Signalqualitätsdaten (106) von dem jeweiligen Knoten (1011) zu der mobilen elektronischen Vorrichtung (202); und
Anzeige der Signalqualitätsdaten (106) über eine Benutzerschnittstelle (203) der mobilen elektronischen Vorrichtung (202).

2. Verfahren nach Anspruch 1, ferner aufweisend:
Speichern der Signalqualitätsdaten (106) in dem jeweiligen Knoten (1011) vor der Übertragung (II) der Signalqualitätsdaten (106) von dem jeweiligen Knoten (1011) zu der mobilen elektronischen Vorrichtung (202).

3. Verfahren nach Anspruch 1 oder Anspruch 2, ferner umfassend:
Einstellen der Stärke des Signals zwischen dem jeweiligen Knoten (1011) und dem Gateway (107) als Reaktion auf die über die Benutzerschnittstelle (203) angezeigten Signalqualitätsdaten (106), ohne den jeweiligen Knoten (1011) zu bewegen oder zu kontaktieren.

4. Verfahren nach Anspruch 3, wobei das Einstellen der Signalstärke zwischen dem jeweiligen Knoten (1011) und dem Gateway (107) mindestens das Einführen eines zusätzlichen Leitweglenkungsknotens in das LPWAN (1) aufweist, der den jeweiligen Knoten (1011) drahtlos mit dem Gateway (107) verbindet.

5. Ein Verfahren nach einem der vorhergehenden Ansprüche, das ferner aufweist:
vor dem Erfassen der Nähe des jeweiligen Knotens (1011) zu der mobilen elektronischen Vorrichtung (202), Installieren des jeweiligen Knotens (1011) an einem von dem Gateway (107) entfernten Ort.

6. Ein Verfahren nach einem der vorhergehenden Ansprüche, ferner umfassend:
vor dem Erfassen der Nähe des jeweiligen Knotens (1011) zu der mobilen elektronischen Vorrichtung (202), Konfigurieren der mobilen elektronischen Vorrichtung (202) durch Einstellen des Schwellenwertes.

7. Eine mobile elektronische Vorrichtung (202) zur Verwendung mit einem Weitverkehrsnetz mit geringer Leistung (LPWAN) (1), wobei die mobile elektronische Vorrichtung (202) zumindest aufweist:
einen Näherungssensor, der so konfiguriert ist, dass er die Nähe eines Knotens (1011, 1012, 101N) in dem LPWAN (1) zu der mobilen elektronischen Vorrichtung (202) erfasst, indem er ein LPWAN-Signal des jeweiligen Knotens (1011) über einem vorbestimmten Schwellenwert erfasst;
eine Einrichtung zum Übertragen (I) eines Steuersignals (201) von der mobilen elektronischen Vorrichtung (202) zu dem jeweiligen Knoten (1011), die Signalqualitätsdaten (106) von dem jeweiligen Knoten (1011) anfordert, wobei die Signalqualitätsdaten (106) die Stärke eines Signals zwischen dem jeweiligen Knoten (1011) und einem Gateway (107) des LPWAN (1) repräsentieren;
eine Einrichtung zum Empfangen (II) der Signalqualitätsdaten (106) von dem jeweiligen Knoten (1011); und die Einrichtung zum Empfangen (II) der Signalqualitätsdaten (106) von dem jeweiligen Knoten (1011)
eine Benutzerschnittstelle (203) zum Anzeigen der Signalqualitätsdaten (106) für einen Benutzer der mobilen Vorrichtung (202).

8. Eine mobile elektronische Vorrichtung nach Anspruch 7, wobei:
die mobile elektronische Vorrichtung (202) eine anwendungsspezifische Vorrichtung ist; und die mobile elektronische Vorrichtung (202) eine anwendungsspezifische Vorrichtung ist; und
der Näherungssensor der mobilen elektronischen Vorrichtung (202) eine dedizierte LPWAN-Antenne aufweist.

9. Eine mobile elektronische Vorrichtung nach Anspruch 7, wobei:
die mobile elektronische Vorrichtung (202) ein Smartphone ist, das eine Antenne aufweist, die zur Verwendung in der mobilen Telefonie bestimmt ist;
der Näherungssensor die Antenne des Smartphones aufweist;
die Benutzerschnittstelle (203) einen Bildschirm des Smartphones aufweist; und
das Smartphone ein Computerprogrammprodukt oder einen Programmcode oder ein System aufweist, das konfiguriert ist, um die Antenne des Smartphones so anzupassen, dass sie als LPWAN-Antenne funktioniert, und um dem Smartphone die Mittel zum Senden (I) des Steuersignals (201) und die Mittel zum Empfangen (II) der Signalqualitätsdaten (106) über die Antenne zu geben.

10. Ein Knoten (1011, 1012, 101N) zur Verwendung in einem Weitverkehrsnetz mit geringer Leistung (LPWAN) (1), wobei der Knoten zumindest aufweist:
mindestens einen Sensor (103);
eine Antenne (104) mit geringer Leistung;
eine elektrische Energiequelle (102) zur Bereitstellung elektrischer Energie für den Sensor (103) und die Antenne (104); und
Mittel zum Übertragen (II) von Signalqualitätsdaten (106), die die Stärke eines Signals zwischen dem Knoten und einem Gateway (107) des LPWAN (1) repräsentieren, von dem Knoten zu einer mobilen elektronischen Vorrichtung (202), wenn dies durch ein von der mobilen elektronischen Vorrichtung (202) empfangenes Steuersignal (201) angefordert wird.

11. Ein Knoten nach Anspruch 10, der weiterhin einen Speicher zum Speichern der Signalqualitätsdaten (106) in dem Knoten (1011) vor dem Übertragen (II) der Signalqualitätsdaten (106) von dem Knoten zu der mobilen elektronischen Vorrichtung (202) aufweist.

12. Knoten nach Anspruch 10 oder Anspruch 11, wobei der mindestens eine Sensor einen Sensor von mindestens einem der folgenden aufweist:
Umgebungsdaten, die Temperatur-, Feuchtigkeits- und/oder Druckmesswerte aufweisen; und
Messdaten, die Versorgungs- und/oder Verbrauchsmesswerte aufweisen.

13. Ein Weitverkehrsnetz mit geringer Leistung (LPWAN) (1), das mindestens einen Knoten (1011, 1012, 101N) nach einem der Ansprüche 10 bis 12 aufweist.

14. Ein Computerprogrammprodukt oder ein Programmcode oder System zum Betrieb einer mobilen elektronischen Vorrichtung nach einem der Ansprüche 7 bis 9.

15. Ein Computerprogrammprodukt oder ein Programmcode oder System zum Betrieb eines Knotens nach einem der Ansprüche 10 bis 12.

## Revendications

1. Une méthode de détermination de la puissance d'un signal entre un noeud (1011, 1012, 101N) et une passerelle (107) dans un réseau étendu de faible puissance (LPWAN) (1), la méthode comprenant au moins :
la détection de la proximité du noeud respectif (1011) par rapport à un dispositif électronique mobile (202) en détectant un signal LPWAN du noeud respectif au-dessus d'une valeur de seuil prédéterminée avec le dispositif électronique mobile (202) ;
transmettre (I) un signal de commande (201) du dispositif électronique mobile (202) au noeud respectif (1011) en demandant des données de qualité de signal (106) du noeud respectif (1011), les données de qualité de signal (106) représentant l'intensité du signal entre le noeud respectif (1011) et la passerelle (107) ;
transmettre (II) les données de qualité du signal (106) du noeud respectif (1011) au dispositif électronique mobile (202) ; et
l'affichage des données sur la qualité du signal (106) via une interface utilisateur (203) de l'appareil électronique mobile (202).

2. Une méthode selon la revendication 1, comprenant en outre :
stocker les données de qualité de signal (106) dans le noeud respectif (1011) avant de transmettre (II) les données de qualité de signal (106) du noeud respectif (1011) au dispositif électronique mobile (202).

3. Une méthode selon la revendication 1 ou la revendication 2, comprenant en outre :
ajuster la force du signal entre le noeud respectif (1011) et la passerelle (107) en réponse aux données de qualité de signal (106) affichées via l'interface utilisateur (203), sans déplacer ou contacter le noeud respectif (1011).

4. Méthode selon la revendication 3, dans laquelle l'ajustement de l'intensité du signal entre le noeud respectif (1011) et la passerelle (107) comprend au moins l'introduction d'un noeud de routage supplémentaire dans le LPWAN (1) connectant sans fil le noeud respectif (1011) à la passerelle (107).

5. Une méthode selon l'une quelconque des revendications précédentes, comprenant en outre :
avant de détecter la proximité du noeud respectif (1011) avec le dispositif électronique mobile (202), l'installation du noeud respectif (1011) dans un endroit éloigné de la passerelle (107).

6. Une méthode selon l'une quelconque des revendications précédentes, comprenant en outre :
avant de détecter la proximité du noeud respectif (1011) par rapport au dispositif électronique mobile (202), configurer le dispositif électronique mobile (202) en fixant la valeur de seuil.

7. Un dispositif électronique mobile (202) destiné à être utilisé avec un réseau étendu de faible puissance (LPWAN) (1), le dispositif électronique mobile (202) comprenant au moins :
un capteur de proximité configuré pour détecter la proximité d'un noeud (1011, 1012, 101N) dans le LPWAN (1) par rapport au dispositif électronique mobile (202) en détectant un signal LPWAN du noeud respectif (1011) au-dessus d'une valeur de seuil prédéterminée ;
des moyens pour transmettre (I) un signal de commande (201) du dispositif électronique mobile (202) au noeud respectif (1011) demandant des données de qualité de signal (106) du noeud respectif (1011), les données de qualité de signal (106) représentant l'intensité d'un signal entre le noeud respectif (1011) et une passerelle (107) du LPWAN (1) ;
des moyens pour recevoir (II) les données de qualité du signal (106) du noeud respectif (1011) ; et
une interface utilisateur (203) permettant d'afficher les données relatives à la qualité du signal (106) à un utilisateur de l'appareil mobile (202).

8. Dispositif électronique mobile selon la revendication 7, dans lequel :
le dispositif électronique mobile (202) est un dispositif spécifique à une application ; et
le capteur de proximité de l'appareil électronique mobile (202) comprend une antenne LPWAN dédiée.

9. Dispositif électronique mobile selon la revendication 7, dans lequel :
le dispositif électronique mobile (202) est un téléphone intelligent comprenant une antenne conçue pour être utilisée en téléphonie mobile ;
le capteur de proximité comprend l'antenne du téléphone intelligent ;
l'interface utilisateur (203) comprend un écran d'affichage du téléphone intelligent ; et
le smart phone comprend un produit de programme informatique ou un code de programme ou un système configuré pour adapter l'antenne du smart phone afin qu'elle fonctionne comme une antenne LPWAN et pour donner au smart phone les moyens de transmettre (I) le signal de commande (201) et les moyens de recevoir (II) les données de qualité du signal (106) par l'intermédiaire de l'antenne.

10. Un noeud (1011, 1012, 101N) destiné à être utilisé dans un réseau étendu de faible puissance (LPWAN) (1), le noeud comprenant au moins :
au moins un capteur (103) ;
une antenne de faible puissance (104) ;
une source d'énergie électrique (102) pour fournir de l'énergie électrique au capteur (103) et à l'antenne (104) ; et
des moyens pour transmettre (II) des données de qualité de signal (106) représentant l'intensité d'un signal entre le noeud et une passerelle (107) du LPWAN (1), du noeud à un dispositif électronique mobile (202) lorsque cela est demandé par un signal de commande (201) reçu du dispositif électronique mobile (202).

11. Noeud selon la revendication 10, comprenant en outre une mémoire pour stocker les données de qualité du signal (106) dans le noeud (1011) avant de transmettre (II) les données de qualité du signal (106) du noeud au dispositif électronique mobile (202).

12. Noeud selon la revendication 10 ou la revendication 11, dans lequel le au moins un capteur comprend un capteur d'au moins l'un des éléments suivants
des données environnementales comprenant des lectures de température, d'humidité et/ou de pression ; et
les données de comptage comprenant les relevés d'alimentation et/ou de consommation des services publics.

13. Un réseau étendu de faible puissance (LPWAN) (1) comprenant au moins un nœud (1011, 1012, 101N) selon l'une des revendications 10 à 12.

14. Un produit de programme informatique ou un code de programme ou un système pour faire fonctionner un appareil électronique mobile selon l'une des revendications 7 à 9.

15. Produit de programme informatique ou code de programme ou système d'exploitation d'un noeud selon l'une des revendications 10 à 12.
